# EUROPÄISCHE PATENTSCHRIFT

(11) **EP 2 098 579 B1**
(45) Veröffentlichungstag und Bekanntmachung des Hinweises auf die Patenterteilung: **28.07.2010**
(21) Anmeldenummer: 08151977.9
(22) Anmeldetag: 27.02.2008
(51) Int. Cl.: C09J 175/06, C08G 18/12, C08G 18/42, C08G 18/76, B32B 7/12

(54) **Kaschierklebstoff zur Entformung bei erhöhter Temperatur**
Laminate adhesive for higher temperature demoulding
Colle de revêtement destinée au déformage à haute température

(43) Veröffentlichungstag der Anmeldung: 09.09.2009
(73) Patentinhaber: Sika Technology AG, 6340 Baar (CH)
(72) Erfinder: Paschkowski, Kai, 21635, Jork (DE)

(56) Entgegenhaltungen:
- EP-A- 0 522 250
- EP-A- 1 231 232
- WO-A-02/102870

## Beschreibung

### Technisches Gebiet

Die Erfindung betrifft das Gebiet der feuchtigkeitshärtenden Polyurethan-Heissschmelzklebstoffen und deren Verwendung als Kaschierklebstoffe.

### Stand der Technik

Feuchtigkeitshärtende Polyurethan-Heissschmelzklebstoffe werden schon seit geraumer Zeit als Kaschierklebstoffe eingesetzt. Derartige Kaschierklebstoffe, beispielsweise aus DE 199 58 526 A1 oder US 2005/0033004 A1, enthalten typischerweise ein mit Isocyanatgruppen terminiertes Polyurethanprepolymer, welches bei der Applikationstemperatur aufgeschmolzen vorliegt, sich nach der Applikation beim Abkühlen verfestigt und mit Luftfeuchtigkeit vernetzt. Es hat sich jedoch gezeigt, dass diese bekannten Kaschierklebstoffe zwar sehr gut geeignet sind, wenn die kaschierten Artikel bei Raumtemperatur aus dem Kaschierwerkzeug entfernt werden, beim Entfernen bei erhöhter Temperatur sich jedoch vielfach Ablösungen der Folie zeigen, insbesondere wenn es sich beim Trägermaterial um ein dreidimensional geformten Formkörper handelt.

### Darstellung der Erfindung

Die Aufgabe der vorliegenden Erfindung ist es daher, Kaschierklebstoffzusammensetzungen zur Verfügung zu stellen, welche die Nachteile des Standes der Technik überwinden. Überraschenderweise wurde nun gefunden, dass Kaschierklebstoffzusammensetzungen gemäss Anspruch 1 diese Aufgabe lösen.

Diese Kaschierklebstoffzusammensetzungen zeichnen sich insbesondere dadurch aus, dass für deren Herstellung mindestens zwei spezifische bei Raumtemperatur feste Polyesterpolyole eingesetzt werden.

Die Kaschierklebstoffzusammensetzungen zeigen exzellente Resultate bei der Kaschierung von Formkörpern mittels Kunststoff-Folien. Besonders vorteilhaft hierbei ist jedoch, dass sie auch bei höheren Temperaturen bereits aus dem Kaschierwerkzeug entfernt werden können, ohne dass zuerst gewartet werden muss, bis sich der Klebstoff auf Raumtemperatur abgekühlt hat. Selbst bei Temperaturen von typischerweise 40°C oder mehr, insbesondere 50 °C oder mehr, kann ein verlässlicher Verbund des kaschierten Trägermaterials gewährleistet werden. Dies erlaubt insbesondere ein schnelleres Entformen und damit eine kürzere Taktzeit in einem industriellen Kaschierprozess und ist deshalb neben Gründen der höheren Qualität vor allem wirtschaftlich sehr interessant.

Weitere Aspekte der Erfindung stellen ein Verfahren gemäss Anspruch 9 zum Kaschieren eines Trägermaterials mit einer Kunststoff-Folie sowie ein Kaschiertes Trägermaterial gemäss Anspruch 18 dar.

Bevorzugte Ausführungsformen der Erfindung sind Gegenstand der Unteransprüche.

### Wege zur Ausführung der Erfindung

Die vorliegende Erfindung betrifft in einem ersten Aspekt eine Kaschierklebstoffzusammensetzung, welche ein Isocyanatgruppen aufweisendes Reaktionsprodukt umfasst, welches erhalten wird aus der Reaktion von
a) mindestens einem bei Raumtemperatur festes kristallines Polyesterpolyol **P1** mit einem Molekulargewicht zwischen 1'500 und 9'000 g/mol und einem Erweichungspunkt von mehr als 100°C; und
b) mindestens einem bei Raumtemperatur festes Polyesterpolyol **P2** mit einem Molekulargewicht von 10'000 bis 50'000 g/mol und einem Erweichungspunkt von mehr als 130°C;
c) und gegebenenfalls mindestens einem Polyol **P3**;
   mit
d) mindestens ein Polyisocyanat **P**, wobei das Polyisocyanat **P** in einem stöchiometrischen Überschuss in Bezug auf die Polyole **P1** und **P2** und **P3** eingesetzt wird.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Raumtemperatur" wird eine Temperatur von 25 °C bezeichnet.

Mit "Poly" beginnende Substanznamen wie Polyisocyanat, Polyol oder Polyamin bezeichnen im vorliegenden Dokument Substanzen, die formal zwei oder mehr der in ihrem Namen vorkommenden funktionellen Gruppen pro Molekül enthalten.

Unter 'Molekulargewicht' versteht man im vorliegenden Dokument stets das Molekulargewichtsmittel Mₙ.

Unter "kristallinen" Polyolen werden in diesem Dokument auch Polyole verstanden, welche nicht vollständig kristallin, d.h. teilkristallin, sind.

Alle Erweichungspunkte (Softening point) von Polyolen werden in diesem Dokumente nach der Ring & Kugel- Methode gemäss DIN ISO 4625 ermittelt.

Das bei Raumtemperatur feste kristalline Polyesterpolyol **P1** weist ein Molekulargewicht zwischen 1'500 und 9'000 g/mol und einen Erweichungspunkt von mehr als 100°C auf.

Das Polyesterpolyol **P2** ist bei Raumtemperatur fest und weist ein Molekulargewicht von 10'000 bis 50'000 g/mol und einen Erweichungspunkt von mehr als 130°C auf.

Als Polyesterpolyole für **P1** und **P2** geeignet sind mindestens zwei Hydroxylgruppen tragende Polyester, welche nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen, welche auch als Polycaprolacton-Polyole bezeichnet werden.

Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole, welche hergestellt sind aus ε-Caprolacton und einem der vorgenannten zweiwertigen Alkohole als Starter.

Die Polyesterpolyole **P1** und **P2** sind bei Raumtemperatur fest.

Das Polyesterpolyol **P1** ist kristallin. Das Polyesterpolyol **P1** weist einen Erweichungspunkt von mehr als 100°C, insbesondere zwischen 105 und 150°C, bevorzugt zwischen 105 und 130°C. Das Polyesterpolyol **P1** weist vorteilhaft eine OH-Zahl von 10 - 50 mg KOH / g, insbesondere von 25 - 40 mg KOH / g, auf.

Das Polyesterpolyol **P2** kann kristallin oder amorph sein. Bevorzugt ist es kristallin. Das Polyesterpolyol **P2** weist einen Erweichungspunkt von mehr als 130°C, insbesondere zwischen 135 und 190°C, bevorzugt zwischen 140 und 165 °C. Das Polyesterpolyol **P2** weist vorteilhaft eine OH-Zahl von weniger als 5 mg KOH / g, insbesondere von 1 - 5 mg KOH / g, auf.

Als Polyol **P3** sind insbesondere Polyetherpolyole und Polycarbonatpolyole sowie Polyesterpolyole geeignet.

Besonderes bevorzugt ist das Polyol **P3** bei Raumtemperatur flüssig. Insbesondere bevorzugt ist das Polyol **P3** ein bei Raumtemperatur flüssiges Polyesterpolyol, insbesondere Polyesterdiol.

Als Polyetherpolyole, auch Polyoxyalkylenpolyole genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.

Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter 'Molekulargewicht' oder 'Molgewicht' versteht man im vorliegenden Dokument stets das Molekulargewichtsmittel Mₙ. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim^{®} von Bayer vertrieben.

Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polycarbonatpolyole geeignet sind insbesondere jene, wie sie durch Polykondensation beispielsweise der oben genannten - zum Aufbau der Polyesterpolyole eingesetzten - zwei- oder dreiwertigen Alkohole mit Dialkylcarbonaten, wie Dimethylcarbonat, Diarylcarbonaten, wie Diphenylcarbonat, oder Phosgen zugänglich sind.

Besonders geeignet sind Polycarbonatdiole, insbesondere amorphe Polycarbonatdiole.

Als Polyole **P3** ebenfalls geeignet sind:
- Styrol-Acrylnitril- oder Acrylnitril-Methyl(meth)acrylat-gepfropfte Polyetherpolyole. - mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen-oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylnitril, Vinylchlorid, Vinylacetat, Vinylalkohol, Isobutylen und Isopren, beispielsweise polyhydroxyfunktionelle Acrylnitril/Butadien-Copolymere, welche zum Beispiel aus carboxylterminierten Acrylnitril/Butadien-Copolymeren (kommerziell erhältlich unter dem Namen Hypro™(früher Hycar®) CTBN und CTBNX von Nanoresins AG, Deutschland, bzw. Emerald Performance Materials LLC) und Epoxiden oder Aminoalkoholen herstellbar sind; sowie hydrierte polyhydroxyfunktionelle Polymere oder Copolymere von Dienen.

Besonders geeignet als Polyole **P3** sind bei Raumtemperatur flüssige Polyesterpolyole. Diese lassen sich aus den für **P1** und **P2** bereits vorgängig im Detail beschriebenen Edukten herstellen.

Als Polyisocyanat **P** für die Herstellung des Reaktionsproduktes ist in einer Ausführungsform ein Polyisocyanat **PI** in der Form eines monomeren Di- oder Triisocyanates oder eines Oligomeren eines monomeren Diisocyanates oder eines Derivates eines monomeren Diisocyanates geeignet.

Als monomere Di- oder Triisocyanate geeignet sind beispielsweise die folgenden: 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und - 1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diiso-cyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan und Tris-(4-isocyanatophenyl)-thiophosphat.

Als Polyisocyanat **PI** besonders geeignet sind Oligomere oder Derivate von monomeren Diisocyanaten, insbesondere von HDI, IPDI, TDI und MDI. Kommerziell erhältliche Typen sind insbesondere HDI-Biurete, beispielsweise als Desmodur^{®} N 100 und N 3200 (Bayer), Tolonate^{®} HDB und HDB-LV (Rhodia) und Duranate^{®} 24A-100 (Asahi Kasei); HDI-Isocyanurate, beispielsweise als Desmodur^{®} N 3300, N 3600 und N 3790 BA (alle von Bayer), Tolonate^{®} HDT, HDT-LV und HDT-LV2 (Rhodia), Duranate^{®} TPA-100 und THA-100 (Asahi Kasei) und Coronate^{®} HX (Nippon Polyurethane); HDI-Uretdione, beispielsweise als Desmodur^{®} N 3400 (Bayer); HDI-Iminooxadiazindione, beispielsweise als Desmodur^{®} XP 2410 (Bayer); HDI-Allophanate, beispielsweise als Desmodur^{®} VP LS 2102 (Bayer); IPDI-Isocyanurate, beispielsweise in Lösung als Desmodur^{®} Z 4470 (Bayer) oder in fester Form als Vestanat^{®} T1890/100 (Degussa); TDI-Oligomere, beispielsweise als Desmodur^{®} IL (Bayer); sowie gemischte Isocyanurate auf Basis TDI / HDI, zum Beispiel als Desmodur^{®} HL (Bayer). Weiterhin besonders geeeignet sind bei Raumtemperatur flüssige Formen von MDI (sogenanntes "modifiziertes MDI"), welche Gemische von MDI mit MDI-Derivaten, wie beispielsweise MDI-Carbodiimiden bzw. MDI-Uretoniminen oder MDI-Urethanen darstellen, bekannt beispielsweise unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20 und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF).

Die vorgenannten oligomeren Polyisocyanate **PI** stellen in der Praxis üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen. Bevorzugt weisen diese Oligomere einen niedrigen Gehalt an monomeren Diisocyanaten auf.

Als Polyisocyanat **PI** bevorzugt sind bei Raumtemperatur flüssige Formen von MDI, sowie die Oligomeren von HDI, IPDI und TDI, insbesondere die Isocyanurate.

Als Polyisocyanat **P** geeignet ist in einer weiteren Ausführungsform ein Isocyanatgruppen aufweisendes Polyurethanpolymer **PUP.**

Ein geeignetes Isocyanatgruppen aufweisendes Polyurethanpolymer **PUP** ist erhältlich durch die Umsetzung von mindestens einem Polyol mit mindestens einem Polyisocyanat.

Als Polyole für die Herstellung eines Polyurethanpolymers **PUP** können beispielsweise die bereits als Polyester **P1** oder **P2** oder Polyole **P3** genannten Polyole verwendet werden. Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole wie beispielsweise Dimerfettsäurediole, 1,1,1-Trimethylolethan, 1,1,1-Trimethylolpropan, Glycerin, Pentaerythrit, niedrigmolekulare Alkoxylierungsprodukte der vorgenannten zwei- und mehrwertigen Alkohole, sowie Mischungen der vorgenannten Alkohole bei der Herstellung eines Polyurethanpolymers **PUP** mitverwendet werden.

Als Polyisocyanate für die Herstellung eines Polyurethanpolymers **PUP** können aliphatische, cycloaliphatische oder aromatische Polyisocyanate, insbesondere Diisocyanate, verwendet werden, beispielsweise die monomeren Diisocyanate, welche bereits als geeignete Polyisocyanate **PI** erwähnt wurden, sowie Oligomere und Polymere dieser monomeren Diisocyanate, sowie beliebige Mischungen dieser Isocyanate. Bevorzugt sind monomere Diisocyanate, insbesondere MDI, TDI, HDI und IPDI.

Die Herstellung eines Polyurethanpolymers **PUP** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer PUP über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 10, insbesondere 1.5 bis 5.

Vorteilhaft wird die Umsetzung bei einer Temperatur durchgeführt, bei der die verwendeten Polyole, polyisocyanate und das gebildete Polyurethanpolymer flüssig vorliegen.

Das Polyurethanpolymer **PUP** weist ein Molekulargewicht von vorzugsweise über 500 g/mol, insbesondere ein solches zwischen 1000 und 30'000 g/mol, auf.

Weiterhin weist das Polyurethanpolymer **PUP** bevorzugt eine mittlere NCO-Funktionalität im Bereich von 1.8 bis 3 auf.

Als Polyisocyanat **P** geeignet sind schliesslich auch Gemische enthaltend ein Polyurethanpolymer **PUP** und ein Polyisocyanat **PI,** insbesondere einerseits Gemische enthaltend ein MDI-basiertes Polyurethanpolymer **PUP** und monomeres und/oder polymeres **MDI,** sowie andererseits Gemische enthaltend ein IPDI-basiertes Polyurethanpolymer **PUP** und monomeres und/oder oligomeres IPDI.

Besonders bevorzugt als Polyisocyanat **PI** ist ein aromatisches Diisocyanat, insbesondere 4,4'-, 2,4'- und 2,2'-Diphenylmethandiisocyanat und beliebige Gemische dieser Isomeren (MDI) untereinander.

Die Herstellung des Reaktionsproduktes aus kristallinem Polyesterpolyol **P1,** festem Polyesterpolyol **P2,** gegebenenfalls Polyol **P3;** und Polyisocyanat **PI** erfolgt in dem Fachmann bekannter Art und Weise. Insbesondere kann in einer Variante das Polyisocyanat **PI** vorgelegt und eine Mischung der Polyole **P1, P2** und **P3** unter Rühren zugegeben werden. In einer anderen Variante kann eine Mischung der Polyole **P1, P2** und **P3** vorgelegt werden und unter Rühren das Polyisocyanat **PI** zugegeben werden.

Um ein Isocyanatgruppen aufweisendes Reaktionsprodukt zu erhalten ist es wesentlich, dass das Polyisocyanat **PI** in einem stöchiometrischen Überschuss in Bezug auf die Polyole **P1** und **P2** und **P3** eingesetzt wird.

Vorteilhaft beträgt hierbei das Verhältnis zwischen den Isocyanat- und Hydroxylgruppen 1.3 bis 10, insbesondere 1.5 bis 5, bevorzugt 1.8 bis 2.5.

Die Menge aller für die Herstellung des Reaktionsproduktes eingesetzten Polyesterpolyole **P1** ist vorteilhaft so gewählt, dass sie mehr als 20 Gew.-%, insbesondere 25 - 90 Gew.-%, bevorzugt 30 - 85 Gew.-%, bezogen auf die gesamte Zusammensetzung, ist.

Die Menge aller für die Herstellung des Reaktionsproduktes eingesetzten Polyesterpolyole **P2** ist vorteilhaft so gewählt, dass sie mehr als 2 Gew.-%, insbesondere 2.5 - 30 Gew.-%, bevorzugt 5 - 20 Gew.-%, bezogen auf die gesamte Zusammensetzung, ist.

Die Menge aller allenfalls für die Herstellung des Reaktionsproduktes eingesetzten Polyesterpolyole **P3** ist vorteilhaft so gewählt, dass sie 10 - 50 Gew.-%, bevorzugt 20 - 45 Gew.-%, bezogen auf die gesamte Zusammensetzung, ist.

Es ist besonders vorteilhaft, wenn die Gewichtssumme aller Polyesterpolyole **P1** und aller Polyesterpolyole **P2** grösser ist als die Gewichtssumme aller Polyole **P3.**

Der Anteil des Reaktionsproduktes ist vorteilhaft mehr als 50 Gew.-%, insbesondere mehr als 70 Gew.-%, am Gewicht der Kaschierklebstoffzusammensetzung.

Die Kaschierklebstoffzusammensetzung kann weitere Bestandteile enthalten, wie sie nach dem Stand der Technik üblicherweise eingesetzt werden. Dem Fachmann ist dabei klar, dass solche weiteren Bestandteile in Abhängigkeit der jeweiligen Zusammensetzung und in ihrer Art und Menge so zu wählen sind, dass trotz ihrer Anwesenheit die Lagerstabilität der Zusammensetzung gegeben ist.

Gegebenenfalls enthält die Kaschierklebstoffzusammensetzung nichtreaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat. Besonders geeignet sind Ethylenvinylacetat-Copolymere (EVA), ataktische Poly-α-Olefine (APAO), Polypropylene (PP) und Polyethylene (PE).

Gegebenenfalls enthält die Kaschierklebstoffzusammensetzung Katalysatoren für die Reaktion der Isocyanatgruppen, wie Metallverbindungen oder tertiäre Amine.

Geeignete Metallverbindungen sind beispielsweise Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid, Dibutylzinnoxid, Zinn(II)-carboxylate; Stannoxane wie Laurylstannoxan; Bismutverbindungen wie Bismut(III)-octoat, Bismut(III)-neodecanoat oder Bismut(III)-oxinate.

Geeignete tertiäre Amine sind beispielsweise 2,2'-Dimorpholinodiethylether und andere Morpholinether-Derivate, 1,4-Diazabicyclo[2.2.2]octan und 1,8-Diazabicyclo[5.4.0]undec-7-en.

Ebenso kann die Kaschierklebstoffzusammensetzung Mischungen der genannten Katalysatoren enthalten. Besonders geeignet sind Mischungen von Metallverbindungen und tertiären Aminen.

Gegebenenfalls enthält die Kaschierklebstoffzusammensetzung Reaktivverdünner oder Vernetzer, beispielsweise Oligomere oder Polymere von Diisocyanaten wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Polyisocyanaten mit kurzkettigen Polyolen, sowie Adipinsäure-dihydrazid und andere Dihydrazide, sowie weitere blockierte Amine wie Oxazolidine, Enamine oder Ketimine.

Weiterhin kann die Kaschierklebstoffzusammensetzung andere Zusätze enthalten, wie insbesondere Füllstoffe, Weichmacher, Haftvermittler, insbesondere Silangruppen enthaltende Verbindungen, UV-Absorptionsmittel, UV- oder Wärmestabilisatoren, Antioxidantien, Flammschutzmittel, optische Aufheller, Pigmente, Farbstoffe und Trocknungsmittel, sowie weitere üblicherweise in isocyanathaltigen Zusammensetzungen eingesetzte Substanzen.

In einer bevorzugten Ausführungsform ist die Kaschierklebstoffzusammensetzung frei von Russ.

In einer weiteren bevorzugten Ausführungsform ist die Kaschierklebstoffzusammensetzung ganz frei von Füllstoffen.

Besonders bevorzugt ist die Kaschierklebstoffzusammensetzung frei, bzw. zumindest im Wesentlichen frei, von Weichmachern und Lösemitteln.

Die vorgängig beschriebene Kaschierklebstoffzusammensetzung wird unter Ausschluss von Feuchtigkeit hergestellt und aufbewahrt. In einer geeigneten, klimadichten Verpackung oder Anordnung, wie beispielsweise in einem Fass, einem Beutel oder einer Kartusche, verfügt er über eine hervorragende Lagerstabilität. Mit den Begriffen "lagerstabil" und "Lagerstabilität" in Zusammenhang mit einer Zusammensetzung oder einem Klebstoff wird im vorliegenden Dokument der Sachverhalt bezeichnet, dass die Viskosität der Zusammensetzung bei der Applikationstemperatur bei geeigneter Lagerung in der betrachteten Zeitspanne nicht oder höchstens so stark ansteigt, dass die Zusammensetzung auf die vorgesehene Weise verwendbar bleibt.

Für die Wirkungsweise eines reaktiven Heissschmelzklebstoffes ist es wichtig, dass die Kaschierklebstoffzusammensetzung aufschmelzbar ist, das heisst, dass sie bei der Applikationstemperatur eine genügend niedrige Viskosität aufweist, um applizierbar zu sein, und dass sie beim Erkalten möglichst schnell eine genügende Klebefestigkeit aufbaut, schon bevor die Vernetzungsreaktion mit Wasser, insbesondere in der Form von Luftfeuchtigkeit, abgeschlossen ist (Anfangsfestigkeit). Es hat sich gezeigt, dass die beschriebene Kaschierklebstoffzusammensetzung bei der Applikationstemperatur, welche für Heissschmelzklebstoffe im Bereich von 80 °C bis 200 °C, typischerweise von 120 °C bis 160 °C, liegt, eine gut handhabbare Viskosität aufweist und dass er beim Erkalten genügend schnell eine gute Klebefestigkeit aufbaut. Als gut handhabbare Viskosität wird insbesondere eine Viskosität von 1 - 50 Pa·s verstanden.

In einem weiteren Aspekt betrifft die vorliegende Erfindung ein Verfahren zum Kaschieren eines Trägermaterials mit einer Kunststoff-Folie umfassend die Schritte
i) Applizieren einer wie vorgängig beschriebenen aufgeschmolzenen Kaschierklebstoffzusammensetzung **K** auf eine Kunststoff-Folie **KF;**
ii) Erwärmen der Kunststoff-Folie **KF;**
iii) Kontaktieren der auf der Kunststoff-Folie **KF** befindlichen Kaschierklebstoffzusammensetzung **K** mit einem Trägermaterial **S;**
oder
i') Applizieren einer wie vorgängig beschriebenen aufgeschmolzenen Kaschierklebstoffzusammensetzung **K** auf ein Trägermaterial **S;**
ii') Erwärmen einer Kunststoff-Folie **KF;**
iii') Kontaktieren der auf dem Trägermaterial **S** befindlichen Kaschierklebstoffzusammensetzung mit der Kunststoff-Folie.

Das Wesen der Erfindung zeigt sich insbesondere gut, wenn zeigt nachfolgend an Schritt iii) ein Schritt iv) erfolgt:
iv) Entfernen des kaschierten Trägermaterials aus dem für Schritte i) bis iii), bzw. i') bis iii'), verwendeten Kaschierwerkzeug bei einer Klebstoffstofftemperatur von 40°C oder mehr, insbesondere von 50°C oder mehr, bevorzugt von 55°C bis 100°C.

Es zeigt sich dann insbesondere, dass bei der Verwendung der erfindungsgemässen Kaschierklebstoffzusammensetzung sich starke Vorteile zeigen, dahingehend, dass trotz der hohen Entformungstemperatur die Kaschierverklebung bestehen bleibt und sich kein Ablösen zeigt. Dem Fachmann ist selbstverständlich klar, dass dieser Vorteil auch bei tieferen Temperaturen als 40°C, d.h. auch bei Raumtemperatur vorhanden ist.

Die Applikation der geschmolzenen Kaschierklebstoffzusammensetzung **K** kann auf verschiedenste Art und Weise, beispielsweise durch ein Sprüh-, Streich-, Rakel-, Stempel-, Walz- oder Giessauftragsverfahren, erfolgen.

Die Applikation der Kaschierklebstoffzusammensetzung **K** erfolgt vorzugsweise bei einer Temperatur von 120 - 190 °C in Schritt i), bzw. i').

Die geschmolzene Kaschierklebstoffzusammensetzung **K** wird in der ersten der obigen zwei Varianten dieses Verfahrens auf eine Kunststoff-Folie KF appliziert. Somit entsteht eine beschichtete Kunststoff-Folie.

In einer Ausführungsform kann diese Folie nach dem Erkalten auf Raumtemperatur als beschichtete Folie als Zwischenprodukt verwendet werden. Das Abkühlen kann beschleunigt werden, indem durch ein Abkühlmittel, beispielsweise durch ein Gebläse, insbesondere ein Luftgebläse, gekühlt wird. Die derart hergestellte beschichtete Kunststoff-Folie kann nun je nach Bedarf abgelängt, abgeschnitten, aufgerollt oder direkt weiter verarbeitet werden. Die Rollen mit den beschichteten Kunststoff-Folien können nun je nach Bedarf gelagert oder transportiert werden. Beim Aufrollen können hierbei Trennpapier-Zwischenlagen verwendet werden, um zu verhindern, dass - durch das Rollen bedingt - aufeinander liegende Teile der Folie in direktem Kontakt miteinander sind. Es zeigte sich jedoch, dass in vielen Fällen auf die Verwendung von derartigen Trennpapier-Zwischenlagen verzichtet werden kann, und ein sogenanntes Blocken der aufgerollten Folie auch nach längeren Lager- oder Transportzeiten nicht auftritt. Für eine länger andauernde Lagerung ist es jedoch von grösstem Vorteil, wenn diese beschichtete Folie vor dem Einfluss von Wasser geschützt wird. Dies kann zum Beispiel durch eine feuchtigkeitsdichte Verpackung, wie beispielsweise durch eine verschweisste Kunststoff-Folie oder Aluminiumbeutel erfolgen, wobei vorteilhaft der Innenraum vor dem Verschliessen evakuiert oder mit Schutzgas gefüllt wird. So kann beispielsweise die beschichtete Kunststoff-Folie beim Folienhersteller beschichtet werden, welche darauf hin gelagert und zum Ort oder demjenigen Werk geliefert werden kann, wo dann diese vorbeschichtete Folie mit einem Träger verklebt wird. Trotz dieser unter Umständen langen Zeitspanne zwischen Beschichtung und Verarbeitung kann ein tadelloser Klebverbund gewährleistet werden. Dies kann insbesondere deshalb von grossem Vorteil sein, weil in der Industrie, insbesondere in der Fahrzeugherstellung, ein Trend der Fertigung "weg vom Band hin zum Zulieferer" zu beobachten ist. Dieser Trend setzt sich seinerseits auch zwischen dem direkten Zulieferer - zum Beispiel von Autotüren - und dessen Zulieferer - zum Beispiel von Dekormateralien - fort. Es ist dem Fachmann klar, dass unter gewissen Bedingungen es trotzdem von Vorteil sein kann, Zwischenlagen eines Trennpapiers zu verwenden.

Kurzfristig, d.h. bis zu wenigen Stunden, kann eine beschichtete Kunststoff-Folie vielfach auch ohne eine derartige Verpackung gelagert und weiter verwendet werden.

Die so hergestellten beschichteten Kunststoff-Folien können dann weiter verklebt werden, indem die beschichtete Folie, bzw. die darauf befindliche Kaschierklebstoffzusammensetzung **K,** erhitzt, bzw. an- oder aufgeschmolzen wird, entsprechend Schritt ii), und dann mit der Oberfläche eines Trägermaterials **S** kontaktiert wird, entsprechend Schritt iii) im vorgängig beschriebenen Verfahren.

Nach dem Kontaktieren des Klebstoffes mit dem Trägermaterial **S**, d.h. nach dem Schritt iii), bzw. nach dem Kontaktieren des Klebstoffes mit der Kunststoff-Folie **KF,** d.h. nach dem Schritt iii'), erkaltet die Kaschierklebstoffzusammensetzung **K** und verfestigt sich. Durch diese Verfestigung erfolgt der Aufbau einer Anfangsfestigkeit, so dass geringe Kräfte zwischen den Substraten bereits übertragen werden können und unter Umständen ein Abrutschen eines Substrates verhindert werden kann und ein Transportieren erfolgen kann. Durch die Reaktion von Wasser mit dem Klebstoff erfolgt die Vernetzung des Klebstoffs, was zum Aufbau der Endfestigkeit und der Wärmebeständigkeit führt. Die Reaktion mit Wasser setzt ein, sobald der Klebstoff mit Luftfeuchtigkeit in Kontakt kommt, d.h. im Allgemeinen schon zu Beginn der Applikation. Die Endfestigkeit wird erreicht, wenn die Vernetzung vollständig abgelaufen ist; dies kann sehr unterschiedlich lange dauern, typischerweise einige Tage, und hängt stark von den klimatischen Bedingungen, den Substraten sowie der Klebegeometrie und -stärke ab.

Aus diesem Verfahren zum Kaschieren resultiert ein kaschiertes Trägermaterial 1, bzw. ein Artikel. Das so gebildete kaschiertes Trägermaterial, bzw. der so gebildete Artikel, ist vorteilhaft ein kaschiertes Trägematerial oder ein Artikel der industriellen Fertigung, insbesondere für den Innenausbau. Bevorzugt ist es oder er ein Einbauteil in einem Transportmittel oder wird in der Möbelbranche eingesetzt.

Besonders wichtig ist der Einsatz der beschichteten Kunststoff-Folie, bzw. des beschriebenen Verfahrens, für die Herstellung von Innenauskleidungsteilen von Fahrzeugen, insbesondere von Automobilen. Bespiele für derartige Innenauskleidungsteile sind Türseitenteile, Schalttafeln, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen.

Besonders geeignet ist dieses Verfahren Vakuumtiefziehverfahren. Beim Vakuumtiefziehverfahren kann die Kaschierklebstoffzusammensetzung **K** auf ein Trägermaterial S oder es kann aufgetragen werden, oder es kann eine mit Kaschierklebstoffzusammensetzung **K** beschichtete Kunststoff-Folie **KF** zum Einsatz kommen. Typischerweise wird die Kunststoff-Folie (Dekor aus luftundurchlässigem Material), insbesondere aus Weich-PVC, in einem Rahmen luftdicht eingespannt. Unterhalb der Folie befindet sich eine Unterform, auf die der Träger gelegt wird. Unterform und Träger sind durchbohrt beziehungsweise luftdurchlässig. Das Gerät ist unterwärts weiter luftdicht abgeschlossen. Das Dekormaterial wird vor dem Anlegen des Vakuums, bzw. Unterdruckes, erhitzt, typischerweise auf eine Temperatur von etwa 160 °C, so dass die Folie weich wird und der Heissschmelzklebstoff an- oder aufschmilzt. Beim Absaugen der Luft aus dieser Vorrichtung schmiegt sich nun das Dekormaterial unter dem auf seiner Oberfläche lastenden atmosphärischen Druck passgenau an das Trägerteil und verklebt mit diesem. Das Dekormaterial ist wegen des zu erzeugenden Vakuums, bzw. Unterdruckes, luftundurchlässig. Beim Vakuumtiefziehen kann auch eine wie vorgängig Kaschierklebstoffzusammensetzung **K** beschichtete Kunststoff-Folie, insbesondere aus Weich-PVC, verwendet werden, welche vor dem Kontaktieren, bzw. vor dem Anlegen des Vakuums, erwärmt wird.

Somit erfolgt in dieser Ausführungsform zwischen Schritt ii) und iii), bzw. zwischen Schritt ii') und iii'), ein Anlegen eines Unterdruckes.

Beim Presskaschierungsverfahren kann die Kaschierklebstoffzusammensetzung **K** ebenfalls auf den Träger aufgetragen, bzw. auf dem Dekor, d.h. der Kunststoff-Folie, vorgängig aufgetragen werden. Die Verklebung vom Träger mit dem Dekor erfolgt nach Wärmeaktivierung durch beispielsweise ein IR-Strahlerfeld auf eine Temperatur von typischerweise über 80°C, so dass der Klebstoff zumindest anschmilzt, unter Fügen und Pressen. Das Entformen (Klebstofftemperatur) kann bei Raumtemperatur erfolgen oder dank den erfindungsgemässen Zusammensetzungen bereits bei höheren Temperaturen, d.h. 40 °C oder mehr, insbesondere 50°C oder mehr, bevorzugt von 55°C bis 100°C.

Die hier benutzten Kunststoff-Folien sind vielfach Dekorfolien und weisen eine Oberflächenstruktur auf. Diese Oberflächenstruktur auf der KunststoffFolie kann vor, während oder nach dem Verkleben eingeprägt werden.

Besonders gut zeigen sich die Vorteile des vorliegenden Verfahrens wenn das Trägermaterial eine dreidimensional verformte Oberfläche aufweist. Als ein Trägermaterial mit einer dreidimensional verformten Oberfläche wird hierbei ein Trägermaterial von nicht-planarer Geometrie verstanden, d.h. insbesondere nicht in Form von Platten. Trägermaterial mit einer dreidimensional verformten Oberfläche können durch Umformprozesse aus Platten hergestellt werden. Derartige Umformprozesse werden typischerweise unter Temperatur- und/oder Druckeinfluss durchgeführt. Weiterhin können Trägermaterial mit einer dreidimensional verformten Oberfläche auch durch bekannte Verfahren insbesondere durch Extrusions- oder Injektionsprozesse wie Reaction Transfer Moulding (RTM) oder Spritzgiessen oder Reaction Injection Moulding (RIM) erhalten werden.

Durch das dreidimensionale Anschmiegen der Folie an die dreidimensional verformten Oberfläche sind nämlich die auf die Kunststoff-Folie wirkenden Kräfte sehr gross, insbesondere zu einem frühen Zeitpunkt, wenn die chemische Vernetzung noch nicht vollzogen ist, und vor allem bei hohen Temperaturen, wenn bei üblichen Heissschmelzklebstoffen die durch das Erkalten des Klebstoffes bewirkte physikalische Adhäsions- und Kohäsionskräfte des Heissschmelzklebstoffes noch nicht oder nicht vollständig ausgebildet sind.

Diese auf die Kunststoff-Folie, bzw. auf die Kaschierklebstoffzusammensetzung, wirkenden Kräfte sind besonders gross bei dünnen Klebstoffschichtdicken. Somit kommen die erfindungswesentlichen Vorteile vor allem bei dünnen Klebstoffschichten zum Tragen.

Es bilden sich in auch Vertiefungen des Trägermaterials, d.h. bei Einbuchtungen, Kanälen, Ecken und dergleichen, insbesondere wo die Oberfläche des Trägermaterials konkav gestaltet ist, ein guter Verbund zwischen Kunststoff-Folie und Trägermaterial.

Vorteilhaft beträgt somit die Schichtdicke der Kaschierklebstoffzusammensetzung **K** nach dem Kontaktieren in Schritt iii), bzw. in Schritt iii'), weniger als 500 µm, insbesondere zwischen 5 µm und 200 µm, vorzugsweise zwischen 10 µm und 150 µm.

Die Kunststoff-Folie insbesondere ist aus Weich-Polyvinylchlorid (Weich-PVC) ist.

Das Trägermaterial ist einerseits insbesondere aus einem thermoplastischen Kunststoff, welcher insbesondere ausgewählt ist aus der Gruppe bestehend aus thermoplastisches Polyurethan (TPU), Acrylonitril/Butadien/Styrol-Copolymer (ABS), Polycarbonat (PC), Polypropylen (PP) und deren Mischungen.

Das Trägermaterial ist andererseits insbesondere ein harzgebundenes Fasermaterial. Als Fasermaterial dienen insbesondere Sägespäne, Wolle, Filz, Baumwollfasern, natürliche Pflanzenfasern wie Sisal-, Jute-, Hanf-, Leinen- oder Kokosfasern.

### Kurze Beschreibung der Zeichnungen

Im Folgenden wird die Erfindung anhand von Zeichnungen schematisch weiter veranschaulicht. Gleiche Elemente sind in den verschiedenen Figuren mit den gleichen Bezugszeichen versehen. Bewegungen sind mit Pfeilen angegeben. Es zeigen:
- Fig. 1: Schematischer Querschnitt durch ein kaschiertes Trägermaterial
- Fig. 2: Aufbau einer mit Kaschierklebstoff **K** beschichteten Kunststoff-Folie
Fig.2a einen schematischen Querschnitt durch eine mit Kaschierklebstoff **K** beschichteten Kunststoff-Folie **KF**
Fig. 2b einen Querschnitt durch ein schematisches Herstellverfahren für eine mit Kaschierklebstoff **K** beschichteten Kunststoff-Folie **KF.**
- Fig. 3: Schematische, perspektivische Querschnittsansicht eines dreidimen- sional verformtes Trägermaterial Fig. 3a vor dem Kaschieren Fig. 3b nach dem Kaschieren
- Fig. 4a: Fotografie eines kaschierten Trägermaterials ohne Ablösen der Folie Beurteilung "gut"
- Fig. 4b: Fotografie eines kaschierten Trägermaterials mit Ablösen der Folie Beurteilung "schlecht".

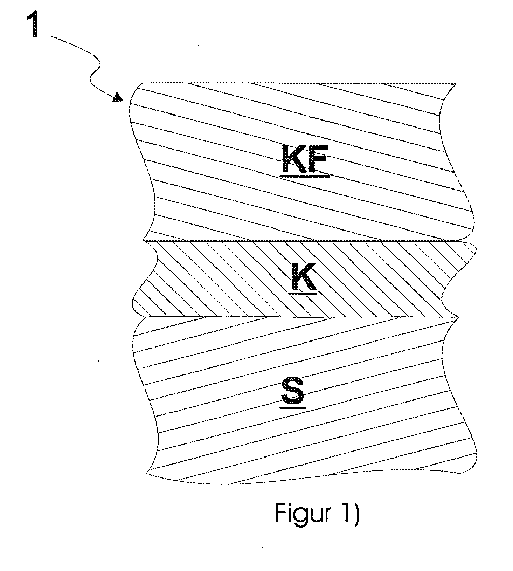

Figur 1 zeigt ein kaschiertes Trägermaterial 1, welches aus einem Trägermaterial **S,** einer Kunststoff-Folie **KF** und einem Kaschierklebstoff **K** besteht.

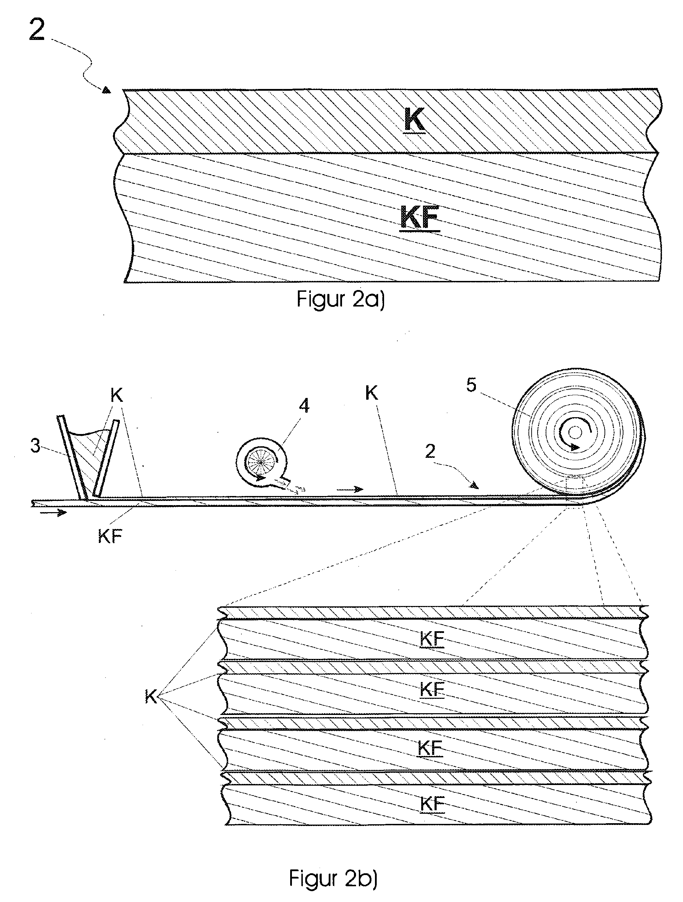

Figur 2a zeigt eine mit einem Heissschmelzklebstoff **K** beschichtete Kunststoff-Folie 2. Der Kaschierklebstoff **K** ist hierbei auf eine Kunststoff-Folie **KF** schichtartig appliziert worden.

Figur 2b zeigt schematisch die Herstellung einer beschichteten KunststoffFolie 2. In der hier gezeigten Ausführungsform wird der Kaschierklebstoff **K** mittels Auftrageinheit 3 auf die Kunststoff-Folie **KF** als Schicht aufgetragen. Hierbei wird die Kunststoff-Folie unter der Auftrageeinheit 3 bewegt. Typischerweise wird die Kunststoff-Folie von einer Rolle (nicht gezeigt) abgewickelt. Anschliessend an den Auftrag wird der geschmolzene Kaschierklebstoff **K** mittels Abkühlmittel 4 (beispielsweise ein Luftgebläse) abgekühlt. Die Figur 2b zeigt weiterhin, dass diese beschichtete Kunststoff-Folie 2 aufgerollt wird. Weiterhin ist in Figur 2b im unteren Teil ein vergrösserter schematischer Ausschnitt einer Rolle 5 mit aufgerollter beschichteter Kunststoff-Folie 2 gezeigt. Durch das Aufrollen der beschichteten Kunststoff-Folie bedingt, sind die einzelnen Lagen der beschichteten Kunststoff-Folie 2 in direktem Kontakt miteinander und weisen insbesondere keine Zwischenlagen eines Trennpapiers auf. Die beschichtete Kunststoff-Folie kann bei Bedarf ohne Blocken, auch nach längerer Lagerungs- oder Transportzeit, von der Rolle 5 abgewickelt werden.

Eine derartige beschichtete Kunststoff-Folie 2 wird bei Bedarf erhitzt, so dass sie, bzw. der Kaschierklebstoff **K,** weich wird, bzw. zumindest angeschmolzen wird, und mit einem Trägermaterial **S** kontaktiert und typischerweise unter Druck verklebt, so dass ein kaschiertes Trägermaterial 1, wie es in Figur 1 dargestellt ist, entsteht.

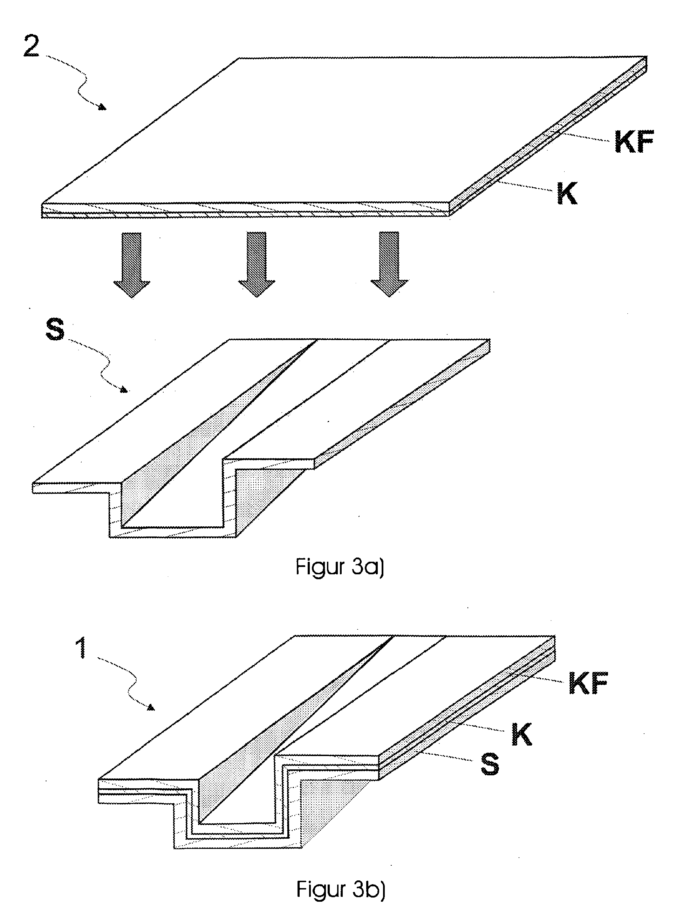

Figur 3a zeigt eine perspektivische Querschnittsansicht einer Kunststoff-Folie **KF** sowie eines dreidimensional verformten Trägermaterials **S** vor dem Kaschierprozess.

Figur 3b zeigt eine perspektivische Querschnittsansicht eines kaschierten dreidimensional verformten Trägermaterials 1 nach dem Kaschierprozess.

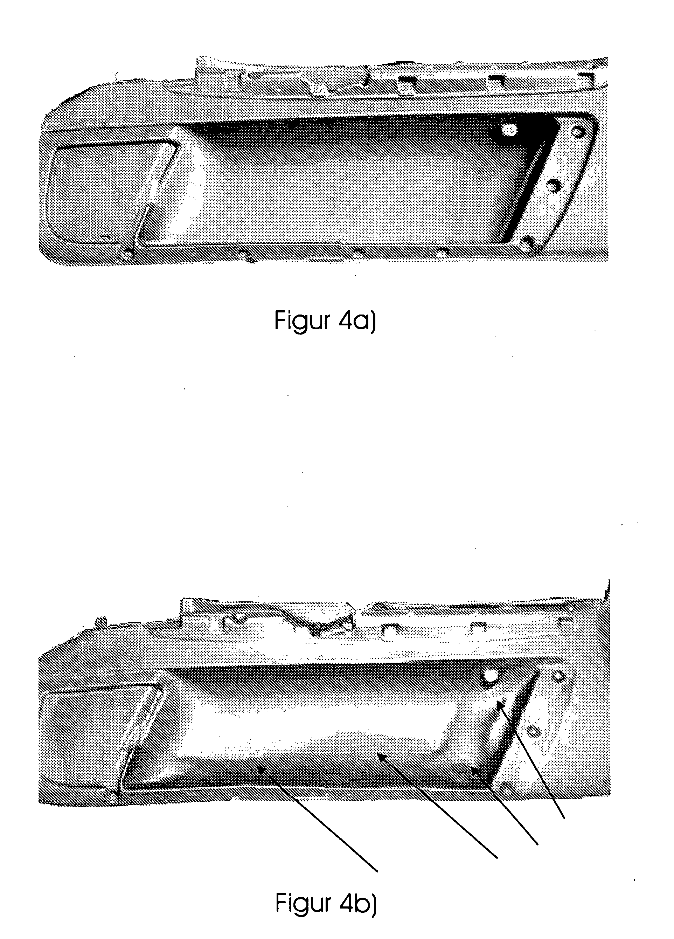

Die Figur 4 a) zeigt eine Fotoaufnahme eines "gut" und die Figur 4 b) eines "schlecht" kaschierten Trägermaterials. Das Trägermaterial ist in diesem Fall ein harzgebundenes Naturfaser-Trägermaterial und die Kunststoff-Folie ist eine Weich-PVC Folie. In den durch Pfeile markierten Gebieten zeigt sich in Figur 4b ein Ablösen der PVC-Folie vom Trägermaterial.

### Bezugszeichenliste

- 1: Kaschiertes Trägermaterial
- 2: Beschichtete Kunststoff-Folie
- 3: Auftrageeinheit
- 4: Abkühlmittel
- 5: Rolle einer beschichteten Kunststoff-Folie 2
- **K**: Kaschierklebstoff, Kaschierklebstoffzusammensetzung
- **KF**: Kunststoff-Folie
- **S**: Trägermaterial

### Beispiele

### Herstellung von Heissschmelzklebstoffen

Es wurden gemäss Tabelle 2 der Klebstoff ***1*** sowie die Vergleichsklebstoffe ***Ref. 1***, ***Ref. 2*** und ***Ref. 3*** hergestellt, in dem zu den aufgeschmolzenen Polyolen gemäss Tabelle 1 die entsprechende Menge Polyisocyanat in der Wärme unter Rühren und Teilvakuum langsam zugegeben wurde. Nach dem Erreichen eines konstanten NCO-Gehaltes wurde der Klebstoff in feuchtigkeitsdichte Aluminiumkartuschen abgefüllt.

**Tabelle 1. Benutzte Polyole**

| **Bezeichnung** | **Charakterisierung** |
|---|---|
| ***P1'*** | bei Raumtemperatur festes, teilkristallines gesättigtes Polyesterpolyol, Molekulargewicht 3'500 g/mol, Hydroxylzahl: 27-34 mg KOH/g, Erweichungspunkt: 128°C |
| ***P2'*** | bei Raumtemperatur festes, teilkristallines gesättigtes Polyesterpolyol, Molekulargewicht 11'000 g/mol, Hydroxylzahl: 10 mg KOH/g, Erweichungspunkt: 155°C |
| ***P3-1'*** | bei Raumtemperatur flüssiges gesättigtes Polyesterpolyol, Hydroxylzahl: 18 - 24 mg KOH/g, Molekulargewicht 5'550 g/mol |
| ***P3-2'*** | bei Raumtemperatur festes amorphes gesättigtes Polyesterpolyol, Hydroxylzahl: 31 - 39 mg KOH/g, Molekulargewicht 3'000 g/mol, Erweichungspunkt: 76°C |

Die Klebstoffe wurden aufgeschmolzen bei einer Temperatur von 160°C auf eine Weich-PVC-Folie (Foliendicke: 2 mm) 100 g/m² mittels Walzenauftrag aufgetragen. Anschliessend wurde die so beschichtete Kunststoff-Folie mittels Vakuum-Tiefkaschierung auf ein dreidimensional geformtes harzgebundenes Naturfaser-Trägermaterial unter Erwärmen der Folie (mittels IR-Strahler Temperatur Folien-Unterseite (d.h. Klebstoffseite) 255 - 265 °C) nach unterschiedlich langer Vakuumzeit (*t_{vac}*) aufkaschiert.

Für die Beurteilung der Eigenschaften wurden bei unterschiedlichen Entformtemperaturen (T*_{E}* ), welche durch Messung der Klebstofftemperatur beim Entfomen mittels Thermoelement gemessen wurden, das kaschierte Trägermaterial aus dem Kaschierwerkzeug entfernt und visuell begutachtet. Konnte ein Ablösen der Folie erkannt werden, wurde das Ergebnis in Tabelle 2 als "schlecht" beurteilt. Trat kein Ablösen der Folie auf, wurde das Ergebnis in Tabelle 2 als "gut" beurteilt.

**Tabelle 2. Klebstoffformulierungen.**

| | ***1*** | ***Ref.1*** | ***Ref.2*** | ***Ref.3*** |
|---|---|---|---|---|
| ***P1'*** | 40.33 | 40.33 | 40.33 | |
| ***P2'*** | 8.07 | | | 8.07 |
| ***P3-1'*** | 12.10 | 12.10 | 12.10 | 12.10 |
| ***P3-2'*** | 28.23 | 28.23 | 36.30 | 28.23 |
| | | | | |
| Desmodur 44 MC (MDI) | 11.28 | 11.50 | 12.90 | 6.00 |
| *T_{E}* = 55°C | | | | |
| *t_{vac}* = 20 s | gut | schlecht | schlecht | schlecht |
| *t_{vac}* = 30 s | gut | schlecht | schlecht | schlecht |
| *t_{vac}* = 55 s | gut | schlecht | schlecht | schlecht |
| | | | | |
| *T_{E}* = 40°C | | | | |
| *t_{vac}* = 20 s | gut | schlecht | schlecht | schlecht |
| *t_{vac}* = 30 s | gut | schlecht | schlecht | schlecht |
| *t_{vac}* = 55 s | gut | schlecht | schlecht | schlecht |

Die Figur 4a) zeigt eine Fotoaufnahme von Beispiel ***1*** (eines "gut" kaschierten Trägermaterials) und die Figur 4b) eine typische Fotoaufnahme eines der Vergleichsbeispiele ***Ref.1* - *Ref.3*** (eines "schlecht" kaschierten Trägermaterials). Es zeigen sich in Figur 4b) in denjenigen Bereichen, wo das Trägermaterial Vertiefungen aufweist, insbesondere an den Orten hoher Oberflächenkrümmung, starke Ablösungen. Diese Gebiete sind durch Pfeile markiert.

## Patentansprüche

1. Kaschierklebstoffzusammensetzung umfassend ein Isocyanatgruppen aufweisendes Reaktionsprodukt, welches erhalten wird aus der Reaktion von
a) mindestens einem bei Raumtemperatur festes kristallines Polyesterpolyol **P1** mit einem Molekulargewicht zwischen 1'500 und 9'000 g/mol und einem Erweichungspunkt von mehr als 100°C; und
b) mindestens einem bei Raumtemperatur festes Polyesterpolyol **P2** mit einem Molekulargewicht von 10'000 bis 50'000 g/mol und einem Erweichungspunkt von mehr als 130°C;
c) und gegebenenfalls mindestens einem Polyol **P3;**
mit
d) mindestens ein Polyisocyanat **P**, wobei das Polyisocyanat **P** in einem stöchiometrischen Überschuss in Bezug auf die Polyole **P1** und **P**2 und **P3** eingesetzt wird.

2. Kaschierklebstoffzusammensetzung gemäss Anspruch 1, **dadurch gekennzeichnet, dass** das Polyesterpolyol **P1** eine OH-Zahl von 10 - 50 mg KOH / g, insbesondere von 25 - 40 mg KOH / g, aufweist.

3. Kaschierklebstoffzusammensetzung gemäss Anspruch 1 oder 2, **dadurch gekennzeichnet, dass** die Menge aller für die Herstellung des Reaktionsproduktes eingesetzten Polyesterpolyole **P1** so gewählt ist, dass sie mehr als 20 Gew.-%, insbesondere 25 - 90 Gew.-%, bevorzugt 30 - 85 Gew.-%, bezogen auf die gesamte Zusammensetzung, ist.

4. Kaschierklebstoffzusammensetzung gemäss einem der vorhergehenden Ansprüche, **dadurch gekennzeichnet, dass** das Polyesterpolyol **P2** eine OH-Zahl von weniger als 5 mg KOH / g, insbesondere von 1 - 5 mg KOH / g, aufweist.

5. Kaschierklebstoffzusammensetzung gemäss einem der vorhergehenden Ansprüche, **dadurch gekennzeichnet, dass** die Menge aller für die Herstellung des Reaktionsproduktes eingesetzten Polyesterpolyole **P2** so gewählt ist, dass sie mehr als 2 Gew.-%, insbesondere 2.5 - 30 Gew.-%, bevorzugt 5 - 20 Gew.-%, bezogen auf die gesamte Zusammensetzung, ist.

6. Kaschierklebstoffzusammensetzung gemäss einem der vorhergehenden Ansprüche, **dadurch gekennzeichnet, dass** das Polyisocyanat **P** ein aromatisches Diisocyanat, insbesondere 4,4'-, 2,4'- und 2,2'-Diphenylmethandiisocyanat und beliebige Gemische dieser Isomeren (MDI) untereinander, ist.

7. Kaschierklebstoffzusammensetzung gemäss einem der vorhergehenden Ansprüche, **dadurch gekennzeichnet, dass** der Anteil des Reaktionsproduktes mehr als 50 Gew.-%, insbesondere mehr als 70 Gew.-%, am Gewicht der Kaschierklebstoffzusammensetzung ist.

8. Kaschierklebstoffzusammensetzung gemäss einem der vorhergehenden Ansprüche, **dadurch gekennzeichnet, dass** das Polyol **P3** ein bei Raumtemperatur flüssiges Polyol, insbesondere ein bei Raumtemperatur flüssiges Polyesterpolyol, ist.

9. Verfahren zum Kaschieren eines Trägermaterials mit einer Kunststoff-Folie umfassend die Schritte
i) Applizieren einer aufgeschmolzenen Kaschierklebstoffzusammensetzung **(K)** gemäss einem der Ansprüche 1 bis 8 auf eine Kunststoff-Folie **(KF);**
ii) Erwärmen der Kunststoff-Folie (**KF**);
iii) Kontaktieren der auf der Kunststoff-Folie (KF) befindlichen Kaschierklebstoffzusammensetzung **(K)** mit einem Trägermaterial **(S);**
oder
i') Applizieren einer aufgeschmolzenen Kaschierklebstoffzusammensetzung **(K)** gemäss einem der Ansprüche 1 bis 8 auf ein Trägermaterial **(S);**
ii') Erwärmen einer Kunststoff-Folie **(KF);**
iii') Kontaktieren der auf dem Trägermaterial **(S)** befindlichen Kaschierklebstoffzusammensetzung mit der Kunststoff-Folie.

10. Verfahren gemäss Anspruch 9, **dadurch gekennzeichnet, dass** nachfolgend an Schritt iii) ein Schritt iv) erfolgt:
iv) Entfernen des kaschierten Trägermaterials aus dem für Schritte i) bis iii), bzw. i') bis iii'), verwendeten Kaschierwerkzeug bei einer Klebstoffstofftemperatur von 40°C oder mehr, insbesondere von 50°C oder mehr, bevorzugt von 55°C bis 100°C.

11. Verfahren gemäss Anspruch 9 oder 10, **dadurch gekennzeichnet, dass** zwischen Schritt ii) und iii), bzw. zwischen Schritt ii') und iii)'), ein Anlegen eines Unterdruckes erfolgt.

12. Verfahren gemäss einem der Ansprüche 9 bis 11, **dadurch gekennzeichnet, dass** das Trägermaterial eine dreidimensional verformte Oberfläche aufweist.

13. Verfahren gemäss einem der Ansprüche 9 bis 12, **dadurch gekennzeichnet, dass** das Trägermaterial aus einem thermoplastischen Kunststoff, welcher insbesondere ausgewählt ist aus der Gruppe bestehend aus thermoplastisches Polyurethan (TPU), Acrylonitril/Butadien/Styrol-Copolymer (ABS), Polycarbonat (PC), Polypropylen (PP) und deren Mischungen.

14. Verfahren gemäss einem der Ansprüche 9 bis 12, **dadurch gekennzeichnet, dass** das Trägermaterial ein harzgebundenes Fasermaterial ist.

15. Verfahren gemäss einem der Ansprüche 9 bis 14, **dadurch gekennzeichnet, dass** die Schichtdicke der Kaschierklebstoffzusammensetzung **(K)** nach dem Kontaktieren in Schritt iii), bzw. in Schritt iii)'), weniger als 500 µm, insbesondere zwischen 5 µm und 200 µm, vorzugsweise zwischen 10 µm und 150 µm, beträgt.

16. Verfahren gemäss einem der Ansprüche 9 bis 15, **dadurch gekennzeichnet, dass** die Kaschierklebstoffzusammensetzung **(K)** bei einer Temperatur von 120 - 190 °C in Schritt i), bzw. i'), appliziert wird.

17. Verfahren gemäss einem der Ansprüche 9 bis 16, **dadurch gekennzeichnet, dass** die Kunststoff-Folie aus Weich-Polyvinylchlorid (Weich-PVC) ist.

18. Kaschiertes Trägermaterial (1), welches erhalten wird durch ein Verfahren gemäss einem der Ansprüche 9 bis 17.

## Claims

1. Laminating adhesive composition comprising a reaction product which contains isocyanate groups and is obtained from the reaction of
a) at least one crystalline polyester polyol **P1** which is solid at room temperature and has a molecular weight of between 1500 and 9000 g/mol and a softening point of more than 100°C; and
b) at least one polyester polyol **P2** which is solid at room temperature and has a molecular weight of 10 000 to 50 000 g/mol and a softening point of more than 130°C;
c) and optionally at least one polyol **P3;**
with
d) at least one polyisocyanate **P**, the polyisocyanate **P** being used in a stoichiometric excess in relation to the polyols **P1** and **P2** and **P3**.

2. Laminating adhesive composition according to Claim 1, **characterized in that** the polyester polyol **P1** has an OH number of 10 - 50 mg KOH/g, in particular of 25 - 40 mg KOH/g.

3. Laminating adhesive composition according to Claim 1 or 2, **characterized in that** the amount of all of the polyester polyols **P1** used for preparing the reaction product is chosen such that it is more than 20%, in particular 25% - 90%, preferably 30% - 85% by weight, based on the overall composition.

4. Laminating adhesive composition according to any of the preceding claims, **characterized in that** the polyester polyol **P2** has an OH number of less than 5 mg KOH/g, in particular of 1 - 5 mg KOH/g.

5. Laminating adhesive composition according to any of the preceding claims, **characterized in that** the amount of all of the polyester polyols **P2** used for preparing the reaction product is chosen such that it is more than 2%, in particular 2.5% - 30%, preferably 5% - 20% by weight, based on the overall composition.

6. Laminating adhesive composition according to any of the preceding claims, **characterized in that** the polyisocyanate **P** is an aromatic diisocyanate, in particular 4,4'-, 2,4'- and 2,2'-diphenylmethane diisocyanate and any desired mixtures of these isomers (MDI) with one another.

7. Laminating adhesive composition according to any of the preceding claims, **characterized in that** the fraction of the reaction product is more than 50%, in particular more than 70%, by weight, based on the weight of the laminating adhesive composition.

8. Laminating adhesive composition according to any of the preceding claims, **characterized in that** the polyol **P3** is a polyol which is liquid at room temperature, in particular a polyester polyol which is liquid at room temperature.

9. Method of laminating a support material with a polymeric film, comprising the steps of
i) applying a melted laminating adhesive composition **(K)** according to any of Claims 1 to 8 to a polymeric film **(KF);**
ii) heating the polymeric film **(KF);**
iii) contacting the laminating adhesive composition **(K)** on the polymeric film (**KF**) with a support material **(S);**
or
i') applying a melted laminating adhesive composition **(K)** according to any of Claims 1 to 8 to a support material **(S);**
ii') heating a polymeric film **(KF);**
iii') contacting the laminating adhesive composition on the support material **(S)** with the polymeric film.

10. Method according to Claim 9, **characterized in that** step iii) is followed by a step iv):
iv) removing the laminated support material from the laminating tool used for steps i) to iii), or i') to iii'), at an adhesive temperature of 40°C or more, in particular of 50°C or more, preferably from 55°C to 100°C.

11. Method according to Claim 9 or 10, **characterized in that** between steps ii) and iii), or between steps ii') and iii'), a subatmospheric pressure is applied.

12. Method according to any of Claims 9 to 11, **characterized in that** the support material has a three-dimensionally deformed surface.

13. Method according to any of Claims 9 to 12, **characterized in that** the support material of a thermoplastic polymer, selected in particular from the g r o u p consisting of thermoplastic polyurethane (TPU), acrylonitrile/butadiene/styrene copolymers (ABS), polycarbonate (PC), polypropylene (PP) and mixtures thereof.

14. Method according to any of Claims 9 to 12, **characterized in that** the support material is a resin-bound fibre material.

15. Method according to any of Claims 9 to 14, **characterized in that** the layer thickness of the laminating adhesive composition **(K)** after contacting in step iii), or in step iii'), is less than 500 µm, in particular between 5 µm and 200 µm, preferably between 10 µm and 150 µm.

16. Method according to any of Claims 9 to 15, **characterized in that** the laminating adhesive composition **(K)** is applied at a temperature of 120 - 190°C in step i), or i').

17. Method according to any of Claims 9 to 16, **characterized in that** the polymeric film is of plasticized polyvinyl chloride (pPVC).

18. Laminated support material (1), obtained by a method according to any of Claims 9 to 17.

## Revendications

1. Composition adhésive de contrecollage comprenant un produit de réaction présentant des groupes isocyanate, qui sont obtenus par réaction
a) d'au moins un polyesterpolyol **P1** cristallin solide à température ambiante présentant un poids moléculaire entre 1500 et 9000 g/mole et un point de ramollissement supérieur à 100°C ; et
b) d'au moins un polyesterpolyol **P2** solide à température ambiante présentant un poids moléculaire entre 10 000 et 50 000 g/mole et un point de ramollissement supérieur à 130°C ; et
c) et le cas échéant d'au moins un polyol **P3 ;**
avec
d) au moins un polyisocyanate **P**, où le polyisocyanate **P** est utilisé en un excès stoechiométrique par rapport aux polyols **P1** et **P2** et **P3**.

2. Composition adhésive de contrecollage selon la revendication 1, **caractérisée en ce que** le polyesterpolyol **P1** présente un indice OH de 10-50 mg de KOH/g, en particulier de 25-40 mg de KOH/g.

3. Composition adhésive de contrecollage selon la revendication 1 ou 2, **caractérisée en ce que** la quantité de tous les polyesterpolyols **P1** utilisés pour la préparation du produit de réaction est choisie de manière telle qu'elle représente plus de 20% en poids, en particulier 25-90% en poids, de préférence 30-85% en poids, par rapport à la composition totale.

4. Composition adhésive de contrecollage selon l'une quelconque des revendications précédentes, **caractérisée en ce que** le polyesterpolyol **P2** présente un indice OH inférieur à 5 mg de KOH/g, en particulier de 1-5 mg de KOH/g.

5. Composition adhésive de contrecollage selon l'une quelconque des revendications précédentes, **caractérisée en ce que** la quantité de tous les polyesterpolyols **P2** utilisés pour la préparation du produit de réaction est choisie de manière telle qu'elle représente plus de 2% en poids, en particulier 2,5-30% en poids, de préférence 5-20% en poids, par rapport à la composition totale.

6. Composition adhésive de contrecollage selon l'une quelconque des revendications précédentes, **caractérisée en ce que** le polyisocyanate **P** est un diisocyanate aromatique, en particulier le 4,4'-diphénylméthanediisocyanate, le 2,4'-diphénylméthanediisocyanate et le 2,2'-diphénylméthanediisocyanate et des mélanges quelconques de ces isomères (MDI) les uns avec les autres.

7. Composition adhésive de contrecollage selon l'une quelconque des revendications précédentes, **caractérisée en ce que** la proportion du produit de réaction est supérieure à 50% en poids, en particulier supérieure à 70% en poids, par rapport au poids de la composition adhésive de contrecollage.

8. Composition adhésive de contrecollage selon l'une quelconque des revendications précédentes, **caractérisée en ce que** le polyol **P3** est un polyol liquide à température ambiante, en particulier un polyesterpolyol liquide à température ambiante.

9. Procédé pour le contrecollage d'un matériau support avec une feuille en matériau synthétique, comprenant les étapes suivantes :
i) application d'une composition adhésive de contrecollage (**K**) fondue selon l'une quelconque des revendications 1 à 8 sur une feuille en matériau synthétique (**KF**) ;
ii) chauffage de la feuille en matériau synthétique (**KF**) ;
iii) mise en contact de la composition adhésive de contrecollage (**K**) se trouvant sur la feuille en matériau synthétique (K**F**) avec un matériau support (**S**) ; ou
i') application d'une composition adhésive de contrecollage (**K**) fondue selon l'une quelconque des revendications 1 à 8 sur un matériau support (**S**) ;
ii') chauffage d'une feuille en matériau synthétique (**KF**) ;
iii') mise en contact de la composition adhésive de contrecollage se trouvant sur le matériau support (**S**) avec la feuille en matériau synthétique.

10. Procédé selon la revendication 9, **caractérisé en ce qu'**une étape iv) se déroule après l'étape iii) :
iv) élimination du matériau support contrecollé de l'outil de contrecollage utilisé pour les étapes i) à iii), ou i') à iii') à une température de la masse d'adhésif de 40°C ou plus, en particulier de 50°C ou plus, de préférence de 55°C à 100°C.

11. Procédé selon la revendication 9 ou 10, **caractérisé en ce qu'**on applique une dépression entre l'étape ii) et iii), ou entre l'étape ii') et iii').

12. Procédé selon l'une quelconque des revendications 9 à 11, **caractérisé en ce que** le matériau support présente une surface façonnée en trois dimensions.

13. Procédé selon l'une quelconque des revendications 9 à 12, **caractérisé en ce que** le matériau support est choisi parmi un matériau support thermoplastique, qui est en particulier choisi dans le groupe constitué par le polyuréthane thermoplastique (TPU), un copolymère d'acrylonitrile/butadiène/styrène (ABS), le polycarbonate (PC), le polypropylène (PP) et leurs mélanges.

14. Procédé selon l'une quelconque des revendications 9 à 12, **caractérisé en ce que** le matériau support est un matériau fibreux lié par une résine.

15. Procédé selon l'une quelconque des revendications 9 à 14, **caractérisé en ce que** l'épaisseur de couche de la composition adhésive de contrecollage (**K**) après la mise en contact dans l'étape iii), ou dans l'étape iii'), est inférieure à 500 µm, en particulier entre 5 µm et 200 µm, de préférence entre 10 µm et 150 µm.

16. Procédé selon l'une quelconque des revendications 9 à 15, **caractérisé en ce que** la composition adhésive de contrecollage (**K**) est appliquée à une température de 120-190°C dans l'étape i) ou i').

17. Procédé selon l'une quelconque des revendications 9 à 16, **caractérisé en ce que** la feuille en matériau synthétique est en poly(chlorure de vinyle) souple (PVC souple).

18. Matériau support (1) contrecollé, qui est obtenu par un procédé selon l'une quelconque des revendications 9 à 17.
